(19) Europäisches Patentamt
European Patent Office
Office européen des brevets

(11) **EP 3 919 654 A1**

(12) **EUROPEAN PATENT APPLICATION**
published in accordance with Art. 153(4) EPC

(43) Date of publication:
**08.12.2021 Bulletin 2021/49**

(21) Application number: **20747769.6**

(22) Date of filing: **28.01.2020**

(51) Int Cl.:
**C25B 13/08** (2006.01)     **C25B 9/00** (2021.01)
**C25B 9/08** (2006.01)

(86) International application number:
**PCT/JP2020/002935**

(87) International publication number:
**WO 2020/158719 (06.08.2020 Gazette 2020/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2019 JP 2019014463**

(71) Applicant: **Nippon Shokubai Co., Ltd.
Osaka-shi, Osaka 541-0043 (JP)**

(72) Inventors:
• **EHARA, Toshiya**
  **Suita-shi, Osaka 564-0034 (JP)**
• **NAKAYAMA, Shinya**
  **Suita-shi, Osaka 564-0034 (JP)**
• **FURUSHO, Kazuki**
  **Himeji-shi, Hyogo 671-1282 (JP)**
• **MIYATA, Yoshinori**
  **Suita-shi, Osaka 564-0034 (JP)**

(74) Representative: **Cabinet Beau de Loménie
158, rue de l'Université
75340 Paris Cedex 07 (FR)**

(54) **ALKALI WATER ELECTROLYSIS DIAPHRAGM WITH ELECTRODE, METHOD FOR PRODUCING SAME, AND WATER ELECTROLYSIS DEVICE**

(57)    The present invention aims to provide a diaphragm for alkaline water electrolysis having excellent electrolysis efficiency. The present invention relates to an electrode-integrated diaphragm for alkaline water electrolysis, the diaphragm including: an ion-permeable membrane containing magnesium hydroxide and an organic polymer resin; and an electrode integrated with the membrane.

FIG.1

(a)     (b)     (c)

**EP 3 919 654 A1**

**Description**

TECHNICAL FIELD

The present invention relates to electrode-integrated diaphragms for alkaline water electrolysis. Specifically, the present invention relates to an electrode-integrated diaphragm for alkaline water electrolysis having excellent gas barrier properties and electrolysis efficiency, a method of producing the same, and a water electrolysis device.

BACKGROUND ART

Water electrical decomposition (also referred to as electrolysis) is known as an industrial method of producing hydrogen. It is usually performed by applying a current to water containing an electrolyte such as sodium hydroxide or potassium hydroxide that is introduced to increase the conductivity. Water electrolysis uses an electrolytic cell including an anode compartment containing an anode and a cathode compartment containing a cathode separated by a diaphragm.

Water electrolysis is caused by electron (or ion) transfer. To achieve efficient electrolysis, the diaphragm needs to have high ion permeability. The diaphragm also needs to have gas barrier properties that enable separation of oxygen generated in an anode compartment and hydrogen generated in a cathode compartment from each other. Water electrolysis uses alkaline water in a high concentration of about 30% and is performed at 80°C to 100°C optionally under a pressure of 1 MPa. Thus, the diaphragm also needs to have high-temperature resistance, alkali resistance, and mechanical strength.

Various diaphragms to be used for water electrolysis have been proposed so far. For example, Patent Literature 1 proposes a diaphragm for alkaline water electrolysis including an ion-permeable membrane and a porous reinforcement on one or both of the sides of the ion-permeable membrane, wherein the ion-permeable membrane is composed of a polymer containing an ion exchange group, and the porous reinforcement includes a metal oxide. Also, for example, Patent Literature 2 discloses a diaphragm for alkaline water electrolysis including as constituents: a microporous film that has an average pore diameter within a specific range and a porosity within a specific range and contains a polyphenylene copolymer; and a supporting substrate.

An electrode to be used for water electrolysis needs to have high electrolysis efficiency and durability.

Many types of electrodes have been studied so far, such as an electrode for alkaline water electrolysis including a base material and an Ni-W-S alloy film provided on the base material (Patent Literature 3), an anode for alkaline water electrolysis including a conductive substrate in which the surface contains nickel or a nickel-based alloy and a lithium-containing nickel oxide catalyst layer formed on the surface of the substrate (Patent Literature 4), and an electrode for alkaline water electrolysis including a base material and an Fe-Ni-W alloy film provided on the base material (Patent Literature 5).

The arrangement and structures of a diaphragm and electrodes in an electrolytic cell have been also studied. For example, Patent Literature 6 discloses an electrode in an alkaline water electrolysis device having a structure in which an ion-permeable diaphragm is disposed between a pair of electrodes. In addition, for example, Patent Literature 7 discloses an electrolytic cell including a pair of electrolytic chambers arranged with an ion-permeable diaphragm in between, raw water supply means, a pair of electrodes installed in the respective electrolytic chambers across the diaphragm, and electrolytic water drawing means. The diaphragm is a cation-permeable membrane, and the electrodes closely adhere to the respective surfaces of the cation-permeable membrane to form a membrane-electrode structure through which cationic ions can pass.

CITATION LIST

- Patent Literature

Patent Literature 1: JP 2013-249510 A
Patent Literature 2: JP 2017-66184 A
Patent Literature 3: JP 2012-153958 A
Patent Literature 4: JP 2015-86420 A
Patent Literature 5: JP 2018-127664 A
Patent Literature 6: JP 2009-242922 A
Patent Literature 7: JP 2005-144329 A

2

SUMMARY OF INVENTION

- Technical Problem

As described above, various studies have been conducted on diaphragms and electrodes to be used for water electrolysis in order to improve the required properties thereof, such as electrolysis efficiency, gas barrier properties, and durability.

Conventional diaphragms and electrodes however remain insufficient in electrolysis efficiency and have room for improvement. Further, due to recent advance in energy technology, electrodes and diaphragms having higher performance are required and smaller-sized water electrolysis devices are required. In response to these, diaphragms and electrodes having even higher electrolysis efficiency than before are required to be developed.

The present invention has been made in view of such a current state of the art and aims to provide a diaphragm for alkaline water electrolysis having excellent electrolysis efficiency.

- Solution to Problem

The present inventors have conducted various studies on diaphragms and electrodes to be used for alkaline water electrolysis, and found that integration of a diaphragm containing specific components with an electrode can achieve a reduction in the electrical resistance between electrodes and excellent ion permeability and gas barrier properties, providing a diaphragm-electrode structure having excellent electrolysis efficiency. Thereby, the invention has been completed.

That is, the present invention relates to an electrode-integrated diaphragm for alkaline water electrolysis, the diaphragm including:

an ion-permeable membrane containing magnesium hydroxide and an organic polymer resin; and
an electrode integrated with the membrane.

Preferably, the magnesium hydroxide has an average particle size of 0.05 to 2.0 $\mu$m.

Preferably, the organic polymer resin includes an aromatic hydrocarbon-based resin.

Preferably, the ion-permeable membrane contains 10 to 40 parts by mass of the organic polymer resin relative to 100 parts by mass of the magnesium hydroxide.

Preferably, the ion-permeable membrane further includes a porous support.

Preferably, the ion-permeable membrane includes no porous support.

Preferably, the porous support is a non-woven fabric, woven fabric, or mesh containing at least one resin selected from the group consisting of polypropylene, polyethylene, and polyphenylene sulfide.

The present invention also relates to a water electrolysis device including the electrode-integrated diaphragm for alkaline water electrolysis.

The present invention also relates to a method of producing an electrode-integrated diaphragm for alkaline water electrolysis, the diaphragm including: an ion-permeable membrane containing magnesium hydroxide and an organic polymer resin; and an electrode integrated with the membrane,
the method including:

a step (1) of preparing an ion-permeable membrane-forming composition containing magnesium hydroxide and an organic polymer resin;
a step (2) of bringing the ion-permeable membrane-forming composition into contact with an electrode; and
a step (3) of forming the ion-permeable membrane.

Preferably, the step (2) includes:

a step (2-1) of impregnating the electrode with water; and
a step (2-2) of applying the ion-permeable membrane-forming composition to the electrode.

Preferably, the electrode to be brought into contact with the ion-permeable membrane-forming composition in the step (2) has a water filling percentage of 10 to 80% by volume relative to 100% by volume of the vacant spaces in the electrode.

- Advantageous Effects of Invention

The electrode-integrated diaphragm for alkaline water electrolysis of the present invention has excellent electrolysis efficiency. Use of the electrode-integrated diaphragm for alkaline water electrolysis of the present invention can achieve extremely efficient water electrolysis and can provide a water electrolysis device having excellent electrolysis efficiency.

BRIEF DESCRIPTION OF DRAWINGS

Fig. 1 is a schematic cross section of an exemplary structure of the electrode-integrated diaphragm for alkaline water electrolysis of the present invention.
Fig. 2 is a schematic cross section of an exemplary structure of the electrode-integrated diaphragm for alkaline water electrolysis of the present invention.

DESCRIPTION OF EMBODIMENTS

The present invention is described in detail below.
Any combination of two or more of the following preferred embodiments of the present invention is also a preferred embodiment of the present invention.

1. Electrode-integrated diaphragm for alkaline water electrolysis

The electrode-integrated diaphragm for alkaline water electrolysis of the present invention (hereinafter, also referred to as a "diaphragm for alkaline water electrolysis of the present invention") includes an ion-permeable membrane containing magnesium hydroxide and an organic polymer resin, and an electrode integrated with the membrane.
The diaphragm for alkaline water electrolysis of the present invention has excellent electrolysis efficiency. The reason for this is considered as follows. Integration of the ion-permeable membrane with an electrode may allow the ion-permeable membrane to be a thin membrane that does not need to have a thickness for its self-standing, leading to a small distance between a pair of electrodes with the ion-permeable membrane in between and finally a lower electrical resistance. In addition, since the ion-permeable membrane contains magnesium hydroxide and an organic polymer resin, the ion-permeable membrane can have excellent ion permeability and gas barrier properties even when the ion-permeable membrane has a small thickness.
Also, since the ion-permeable membrane contains magnesium hydroxide and an organic polymer resin, the electrode-integrated diaphragm for alkaline water electrolysis of the present invention has excellent alkali resistance, high temperature resistance, and durability.
The electrode-integrated diaphragm for alkaline water electrolysis of the present invention includes an ion-permeable membrane and an electrode.
The ion-permeable membrane is a porous membrane through which ions can pass when pores are filled with water containing an electrolyte such as sodium hydroxide or potassium hydroxide, i.e., an electrolyte solution.
In the present invention, a state where "the ion-permeable membrane is integrated with an electrode" refers to neither a state where the ion-permeable membrane and the electrode are simply in contact with each other nor a state where the ion-permeable membrane and the electrode are kept in contact with each other with an additional component such as a spring or screw, but refers to a state where the ion-permeable membrane and the electrode are integrated with each other in which at least part of the ion-permeable membrane and at least part of the electrode are joined through magnesium hydroxide or the organic polymer resin in the ion-permeable membrane. Herein, the expressions "integrated" and "integration" each mean a state where the integration of the ion-permeable membrane and the electrode is maintained without any mechanical force. This state is achieved, for example, in the following way. The ion-permeable membrane (surface) and the electrode (surface) are integrated: by joining, fixing, adhering, pressurizing, or coating; through atomic bonding such as covalent bonding, ionic bonding, or metal bonding, or hydrogen bonding, or a van der Waals force; or by incorporating or embedding one of the ion-permeable membrane or the electrode into the surface layer of the other. For example, the integration by joining refers to a state where the ion-permeable membrane and the electrode are integrated with each other in which at least part of the ion-permeable membrane and at least part of the electrode are joined through magnesium hydroxide or the organic polymer resin in the ion-permeable membrane.
In the diaphragm for alkaline water electrolysis, the ion-permeable membrane may be integrated with a cathode or anode or may be integrated with both the electrodes. When the ion-permeable membrane is integrated with both the electrodes, preferably, a cathode is joined to one surface of the ion-permeable membrane and an anode is joined to the other surface.

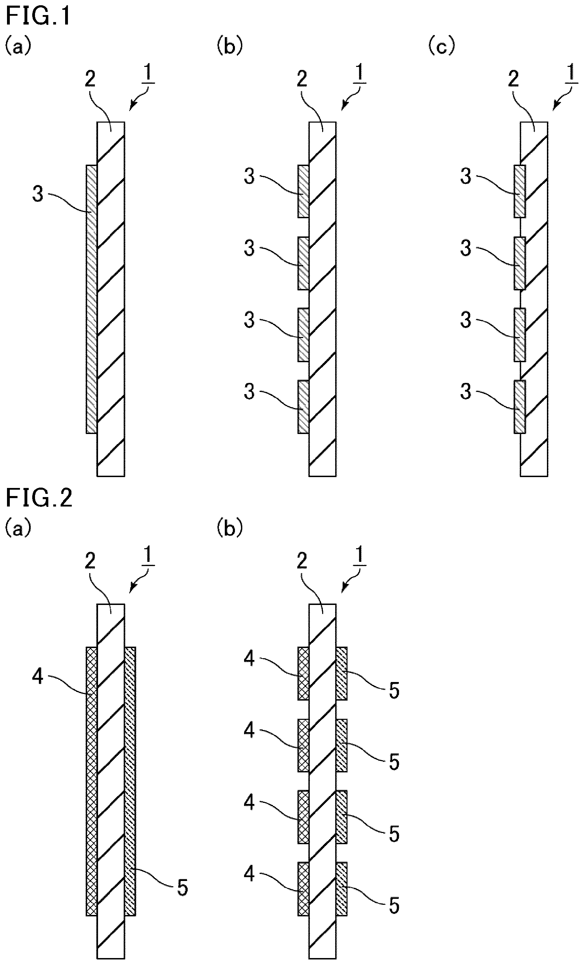

Figs. 1 and 2 each show an exemplary preferred embodiment of the electrode-integrated diaphragm for alkaline water electrolysis of the present invention.

Fig. 1 is a schematic cross section of an exemplary structure of a diaphragm 1 for alkaline water electrolysis with an electrode in which an electrode 3 is integrated with one surface of an ion-permeable membrane 2. The electrode 3 may be a cathode or anode. One electrode 3 may be present as shown in Fig. 1(a) or multiple electrodes of the same type may be present as shown in Fig. 1(b). As shown in Fig. 1(b), the electrodes 3 may be integrated with the ion-permeable membrane 2 on a surface of the ion-permeable membrane 2, or alternatively, the electrodes 3 may be integrated with the ion-permeable membrane 2 with part of each electrode 3 being embedded in the ion-permeable membrane 2 as shown in Fig. 1(c).

Although not shown in the figure, the ion-permeable membrane 2 may be integrated with the electrode(s) 3 with part of the ion-permeable membrane 2 being embedded in the electrode(s) 3.

Fig. 2 is a schematic cross section of an exemplary structure of the diaphragm 1 for alkaline water electrolysis with an electrode in which two electrodes, a cathode 4 or an anode 5, are integrated with the ion-permeable membrane 2 on the respective surfaces. One cathode 4 and one anode 5 may be present as shown in Fig. 2(a) or multiple cathodes 4 and multiple anodes 5 may be present as shown in Fig. 2(b). Alternatively, as described above, the cathode 4 and the anode 5 may be integrated with the ion-permeable membrane 2 on the respective surfaces of the ion-permeable membrane 2, or the cathode 4 and the anode 5 may be integrated with the ion-permeable membrane 2 with part of the electrode 4 and part of the electrode 5 being embedded in the ion-permeable membrane 2. Although not shown in the figure, the ion-permeable membrane 2 may be integrated with the cathode 4 and the anode 5 with part of the ion-permeable membrane 2 being embedded in the cathode 4 and the anode 5.

As shown in Figs. 1 and 2, at the interface between the ion-permeable membrane and the electrode integrated in the electrode-integrated diaphragm for alkaline water electrolysis, the entire surface of the electrode is preferably integrated with part of the surface of the ion-permeable membrane. The diaphragm for alkaline water electrolysis disposed in an electrolytic cell easily forms electrode compartments where the respective electrodes are isolated to each other by an ion-permeable membrane.

Alternatively, at the interface between the ion-permeable membrane and the electrode integrated in the electrode-integrated diaphragm for alkaline water electrolysis, the entire surface of the ion-permeable membrane may be integrated with part of the surface of the electrode. Such a diaphragm can have higher strength and can be easily handled during production of an electrolytic cell. In this case, the electrolytic cell however has a complicated structure. Thus, the entire surface of the electrode is preferably integrated with part of the surface of the ion-permeable membrane.

The following describes the ion-permeable membrane, electrode(s), and optional <Other layers> of the diaphragm for alkaline water electrolysis of the present invention.

<Ion-permeable membrane>

The ion-permeable membrane contains magnesium hydroxide and an organic polymer resin.

The ion-permeable membrane is a porous membrane and can exhibit ion permeability when pores formed by magnesium hydroxide and the organic polymer resin are filled with an electrolyte solution. The ion-permeable membrane containing magnesium hydroxide has excellent alkali resistance. Also, the presence of magnesium hydroxide makes the ion-permeable membrane hydrophilic and can prevent interruption of electrolysis due to adhesion of oxygen gas and hydrogen gas generated by water electrolysis to the diaphragm.

(Magnesium hydroxide)

The magnesium hydroxide may be, but is not limited to, a natural substance or synthetic substance. The magnesium hydroxide may be one not surface-treated or may be one surface-treated with a silane coupling agent, stearic acid, oleic acid, or a phosphoric acid ester.

The magnesium hydroxide may have any shape and may be, for example, amorphous, particulate, granular, tabular such as flaky or hexagonal tabular, or fibrous. In particular, particulate, tabular, or fibrous magnesium hydroxide is preferred because it can be easily dispersed in a solution to prepare a coating liquid for an ion-permeable membrane. In terms of adhesion to the resin and ion permeability, particulate or tabular magnesium hydroxide is more preferred, tabular magnesium hydroxide is still more preferred, and flaky magnesium hydroxide is particularly preferred.

The magnesium hydroxide preferably has an aspect ratio of 1.2 to 8.0. The magnesium hydroxide having an aspect ratio within the range can lead to a membrane having much better ion permeability and excellent uniformity. The aspect ratio is more preferably 1.5 to 7.0, still more preferably 2.0 to 6.0.

The aspect ratio herein means the ratio of the largest diameter (a) to the smallest diameter (b) ((a)/(b)). The aspect ratio can be determined as follows: particulate magnesium hydroxide is observed with a SEM, any 10 particles in the resulting image are analyzed using analysis software to determine the ratios of the largest diameter (a) to the smallest diameter (b) ((a)/(b)) of the particles, and the ratios are averaged to obtain a simple average as the aspect ratio of the particles.

Usually, the smallest diameter (b) is preferably the smallest diameter of the diameters each passing through the midpoint of the largest diameter (a) and perpendicular to the largest diameter.

For example, in the case of a tabular particle such as a flaky or hexagonal particle, the largest diameter (a) indicates the major axis of a tabular face of the particle, and in the case of a fibrous particle, the largest diameter (a) indicates the length of the fiber.

For example, in the case of a tabular particle such as a flaky or hexagonal particle, the smallest diameter (b) indicates the thickness of the particle, and in the case of a fibrous particle, the smallest diameter (b) indicates the diameter of the fiber. Preferably, the thickness of a particle and the diameter of a fiber are respectively the thickness and the diameter each passing through the midpoint of the largest diameter (a).

The magnesium hydroxide preferably has an average particle size of 0.05 to 2.0 $\mu$m. The magnesium hydroxide having an average particle size within the range can lead to a membrane having much better ion permeability and gas barrier properties. The average particle size of the magnesium hydroxide is more preferably 0.1 $\mu$m or greater, still more preferably 0.2 $\mu$m or greater. It is more preferably 1.5 $\mu$m or smaller, still more preferably 1.0 $\mu$m or smaller, particularly preferably 0.5 $\mu$m or smaller.

The average particle size is a volume average particle size (D50) determined by particle size distribution measurement based on laser diffraction. Specifically, the average particle size is determined as follows: the particle size distribution is determined with a laser diffraction/scattering particle size distribution analyzer (Model: "LA-920" available from Horiba, Ltd.), and the median size (D50) in the particle size distribution by volume is determined as the average particle size. A mixture of ethanol and particles dispersed by ultrasonic irradiation therein is used as a sample for measurement.

The magnesium hydroxide preferably has a crystallite size in the direction perpendicular to the (110) plane determined by X-ray diffraction of 35 nm or greater. The magnesium hydroxide having a crystallite size in the direction perpendicular to the (110) plane within the above range can lead to a diaphragm having much better ion permeability and uniformity.

The crystallite size in the direction perpendicular to the (110) plane is preferably 40 nm or greater, more preferably 50 nm or greater, still more preferably 60 nm or greater, particularly preferably 65 nm or greater.

The upper limit of the crystallite size in the direction perpendicular to the (110) plane is usually, but not limited to, for example, 400 nm or smaller, preferably 350 nm or smaller, still more preferably 300 nm or smaller.

The magnesium hydroxide preferably has a crystallite size in the direction perpendicular to the (001) plane determined by X-ray diffraction of 15 nm or greater.

The crystallite size in the direction perpendicular to the (001) plane is more preferably 18 nm or greater, still more preferably 21 nm or greater, particularly preferably 24 nm or greater.

The upper limit of the crystallite size in the direction perpendicular to the (001) plane is usually, but not limited to, for example, 300 nm or smaller, preferably 250 nm or smaller, still more preferably 200 nm or smaller.

The crystallite size can be determined as follows: the X-ray diffraction pattern of particulate magnesium hydroxide is measured by powder X-ray diffraction, and the crystallite size (crystallite size in the direction perpendicular to the lattice plane) is calculated from the breadth (half-band width) of the diffraction line attributed to the corresponding lattice plane using the Scherrer equation.

Magnesium hydroxide having the crystallite sizes within the above specified ranges can be obtained as follows, for example.

An aqueous solution of a magnesium salt (e.g., magnesium chloride, magnesium nitrate) or an aqueous dispersion of magnesium oxide obtained by a conventionally known method is prepared as a starting material, and an alkaline substance (e.g., lithium hydroxide, sodium hydroxide, calcium hydroxide, ammonia water) is added thereto to cause a hydration reaction. Thus, magnesium hydroxide is prepared. In this case, the solubility of the magnesium hydroxide produced may be controlled by addition of an organic acid such as formic acid, acetic acid, or propionic acid; nitric acid; a polybasic acid such as sulfuric acid; or a mixture thereof, or the temperature (e.g., 150°C to 270°C) or the duration (e.g., 30 minutes to 10 hours) of the hydrothermal reaction may be controlled as appropriate. Thereby, magnesium hydroxide particles of different crystallite sizes can be prepared. With a greater amount of such an acid, the crystals grow more greatly and have a greater crystallite size. Also, with a higher temperature and a longer duration of the hydrothermal reaction, the crystals grow more greatly and have a greater crystallite size.

The magnesium hydroxide in the present invention may be a common commercial product. Examples of commercial magnesium hydroxide which may be used in the present invention include 200-06H available from Kyowa Chemical Industry Co., Ltd., UP650-1 available from Ube Material Industries, Ltd., MAGSTAR #20 available from Tateho Chemical Industries Co., Ltd., and #200 available from Konoshima Chemical Co., Ltd.

The magnesium hydroxide is preferably present in an amount of 30 to 95% by mass in 100% by mass of the ion-permeable membrane. The presence of the magnesium hydroxide in an amount within the above range can lead to a diaphragm with further reduced dissolution of an inorganic component in an alkali solution, having excellent ion permeability, gas barrier properties, heat resistance, and alkali resistance. The magnesium hydroxide is more preferably present in an amount of 32 to 85% by mass, still more preferably in an amount of 35 to 80% by mass in 100% by mass of the ion-permeable membrane.

When the ion-permeable membrane does not include the below-described porous support, the magnesium hydroxide is preferably present in an amount of 60 to 95% by mass, more preferably 65 to 93% by mass, still more preferably 70 to 90% by mass in 100% by mass of the ion-permeable membrane.

When the ion-permeable membrane includes the below-described porous support, the magnesium hydroxide is preferably present in an amount of 30 to 85% by mass, more preferably 32 to 80% by mass, still more preferably 35 to 75% by mass in 100% by mass of the ion-permeable membrane.

(Organic polymer resin)

Examples of the organic polymer resin include fluorine-based resins such as polyvinylidene fluoride and polytetrafluoroethylene; olefin resins such as polypropylene; and aromatic hydrocarbon-based resins such as polyethylene terephthalate and polystyrene. Each of these may be used alone, or two or more of these may be used in combination. In order to achieve excellent heat resistance and alkali resistance, aromatic hydrocarbon-based resins are preferred among these.

Examples of the aromatic hydrocarbon-based resins include polyethylene terephthalate, polybutylene terephthalate, polybutylene naphthalate, polystyrene, polysulfone, polyethersulfone, polyphenylene sulfide, polyphenylsulfone, polyarylate, polyetherimide, polyimide, and polyamide-imide. To achieve much better alkali resistance, at least one selected from the group consisting of polysulfone, polyethersulfone, and polyphenylsulfone is preferred among these, and in terms of production, polysulfone is more preferred.

Use of at least one selected from the group consisting of polysulfone, polyethersulfone, and polyphenylsulfone can lead to a diaphragm for alkaline water electrolysis having a much lower membrane resistance and much higher alkali resistance. Such a diaphragm can have more stable size, mass, and membrane resistance and a much better effect of preventing generation of pores when it is used in an alkali solution for a long time.

The organic polymer resin is preferably present in an amount of 3 to 50% by mass in 100% by mass of the ion-permeable membrane. The presence of the organic polymer resin in an amount within the above range can lead to an ion-permeable membrane with reduced dissolution of an inorganic component in an alkali solution, and to a diaphragm having excellent ion permeability, gas barrier properties, heat resistance, and alkali resistance. The organic polymer resin is more preferably present in an amount of 4 to 35% by mass, still more preferably 5 to 30% by mass in 100% by mass of the ion-permeable membrane.

When the ion-permeable membrane does not include the below-described porous support, the organic polymer resin is preferably present in an amount of 5 to 50% by mass, more preferably 10 to 45% by mass, still more preferably 15 to 40% by mass in 100% by mass of the ion-permeable membrane. In this case, the upper limit of the sum of the amounts of the magnesium hydroxide and the organic polymer resin is 100% by mass in 100% by mass of the ion-permeable membrane.

When the ion-permeable membrane includes the below-described porous support, the organic polymer resin is preferably present in an amount of 3 to 50% by mass, more preferably 4 to 40% by mass, still more preferably 5 to 30% by mass in 100% by mass of the diaphragm for alkaline water electrolysis.

The ion-permeable membrane preferably contains 10 to 40 parts by mass, more preferably 12 to 38 parts by mass, still more preferably 15 to 35 parts by mass of the organic polymer resin relative to 100 parts by mass of the magnesium hydroxide. The presence of the magnesium hydroxide and the organic polymer resin in a ratio within the above range can lead to an ion-permeable membrane with reduced dissolution of an inorganic component in an alkali solution, and to a diaphragm having excellent ion permeability, gas barrier properties, heat resistance, and alkali resistance.

(Porous support)

The ion-permeable membrane may further include a porous support. The porous support increases the strength of the ion-permeable membrane and the strength of the diaphragm for alkaline water electrolysis of the present invention, and whereby the ion-permeable membrane can be prevented from damaging or the like during electrolysis.

The porous support is porous and may be a component usable as a support of the ion-permeable membrane. The porous support is preferably a sheet-like component.

The porous support may be made of a resin such as polyethylene, polypropylene, polysulfone, polyethersulfone, polyphenylsulfone, polyphenylene sulfide, polyketone, polyimide, polyetherimide, or fluorine-based resin. Each of these may be used alone, or two or more of these may be used in combination. In order to achieve excellent heat resistance and alkali resistance, the porous support preferably contains at least one resin selected from the group consisting of polypropylene, polyethylene, and polyphenylene sulfide, more preferably contains at least one resin selected from the group consisting of polypropylene and polyphenylene sulfide.

The porous support may be in the form of, for example, a non-woven fabric, woven fabric, mesh, or porous membrane, or a fabric mixture of a non-woven fabric and a woven fabric. It is preferably a non-woven fabric, woven fabric, or mesh, more preferably a non-woven fabric or mesh, still more preferably a non-woven fabric.

In particular, the porous support is preferably a non-woven fabric, woven fabric, or mesh containing at least one resin selected from the group consisting of polypropylene, polyethylene, and polyphenylene sulfide. More preferred is a non-woven fabric or mesh containing polyphenylene sulfide.

When the porous support is in the form of sheet, the porous support may have any thickness as long as the diaphragm for alkaline water electrolysis of the present invention achieves the effects of the present invention. For example, the thickness is preferably 30 to 500 $\mu$m, more preferably 50 to 400 $\mu$m, still more preferably 80 to 300 $\mu$m.

In the ion-permeable membrane, a membrane containing magnesium hydroxide and an organic polymer resin may be formed on one or both of the surfaces of the porous support or may be integrated with the porous support to form a composite. The diaphragm for alkaline water electrolysis of the present invention including the composite of the ion-permeable membrane and the porous support can have higher strength and toughness than that including the ion-permeable membrane as a single membrane.

In a preferred embodiment, the ion-permeable membrane does not include the porous support. The ion-permeable membrane including a membrane containing magnesium hydroxide and an organic polymer resin and including no porous support can provide a diaphragm for alkaline water electrolysis having a smaller thickness, leading to further enhanced electrolysis efficiency.

The ion-permeable membrane preferably has a porosity of 20 to 80% by volume, more preferably 25 to 75% by volume, still more preferably 30 to 70% by volume. The ion-permeable membrane having a porosity within the above range allows pores to be continuously filled with an electrolyte solution, and thus can be a layer having excellent ion permeability and excellent gas barrier properties.

The porosity can be determined as follows: only the ion-permeable membrane is immersed in an electrolyte solution overnight, and the change in mass of the membrane before and after absorbing the electrolyte solution is determined. The porosity can be specifically determined using the following formula.

$$\text{Porosity (\% by volume)} = (\text{Mass of ion-permeable membrane after immersion} - \text{Mass of ion-permeable membrane before immersion})/\text{Density of electrolyte solution/Volume of ion-permeable membrane} \times 100$$

The pore size of the ion-permeable membrane is preferably 0.01 to 1 $\mu$m, more preferably 0.05 to 0.9 $\mu$m, still more preferably 0.1 to 0.8 $\mu$m. The ion-permeable membrane containing pores with a size within the above range can have much better ion permeability.

The pore size can be determined from a surface observation image (magnification: 25000x) of the ion-permeable membrane measured by FE-SEM. Specifically, any 10 pores in a FE-SEM image of the ion-permeable membrane are analyzed using analysis software (Image-Pro Premier available from NIPPON ROPER K.K.) to determine the diameters of the pores, each passing through the center of gravity of the corresponding pore. The diameters are then averaged to give the pore size.

The ion-permeable membrane may have any thickness which may be appropriately designed in accordance with factors such as the size and handleability of a unit in which the diaphragm for alkaline water electrolysis of the present invention is to be used. In terms of the gas barrier properties, ion permeability, or strength, the thickness of the ion-permeable membrane is preferably 50 to 1000 $\mu$m, more preferably 100 to 500 $\mu$m, still more preferably 200 to 400 $\mu$m.

When the ion-permeable membrane includes the above-described porous support, the thickness of the ion-permeable membrane is preferably 50 to 1000 $\mu$m, more preferably 100 to 500 $\mu$m, still more preferably 200 to 400 $\mu$m.

<Electrode>

The electrode may be a known cathode or anode.

Non-limiting examples of an electrode substrate include known conductive materials such as copper, lead, nickel, chromium, titanium, gold, platinum, iron, a metal compound and a metal oxide of any of these, and an alloy containing two or more of these metals. The electrode substrate may contain only one of these or two or more of these.

In particular, the electrode preferably contains a nickel-based material such as a nickel compound, nickel oxide, or nickel alloy or an iron-based material such as an iron compound or iron alloy because they are widely used and highly corrosion-resistant in an alkali solution.

When the electrode is a cathode, the electrode substrate preferably contains a platinum-based material, nickel-based material, iron-based material, or titanium-based material, more preferably contains a nickel-based material, or iron-based material. When the electrode is an anode, the electrode substrate preferably contains a platinum-based material, nickel-based material, iron-based material, or titanium-based material, more preferably contains a nickel-based material or iron-based material.

The electrode may include an electrode substrate made of any of the above-described conductive materials and a catalyst layer formed thereon.

Non-limiting examples of a material of the catalyst layer include a metal compound and a metal oxide each containing at least one metal selected from the group consisting of iron, cobalt, nickel, ruthenium, rhodium, palladium, osmium, iridium, and platinum and an alloy of any of these. Specific examples thereof include nickel such as Raney nickel; a nickel alloy such as Ni-Co, Ni-Fe, Ni-P, Ni-P-W, or Ni-W-S; a spinel compound such as $Co_3O_4$ or $NiCo_2O_4$; a perovskite compound such as $LaCoO_3$ or $La_{0.6}Sr_{0.4}CoO_3$; and an alloy of a first metal selected from the group consisting of iron, titanium, niobium, zirconium, tantalum, tin, molybdenum, and bismuth and a second metal selected from the group consisting of nickel, cobalt, silver, and platinum.

In the case of a cathode, the catalyst layer preferably contains a nickel-containing metal compound, metal oxide, or alloy among these, for example.

In the case of an anode, the catalyst layer preferably contains a cobalt, palladium, iridium, or platinum-containing metal compound, metal oxide, or alloy among these, for example.

The electrode may be in any form and may be in the form of a sheet, rod, or prism shape, or another known shape. In order to increase the contact area between the electrode and the ion-permeable membrane and to further increase the electrolysis efficiency, the electrode is preferably in the form of a sheet.

In an exemplary preferred embodiment of the electrode, the electrode includes a porous substrate with high electron conductivity.

The porous substrate is preferably, for example, one commonly serving as a current collector or power feeder.

The porous substrate may be made of, for example, any of materials similar to known materials of current collectors and power feeders, such as a platinum-based material and a nickel-based material.

The porous substrate is preferably in the form of, for example, a web or mesh or a porous metal body such as a foam metal or sintered metal.

The porous substrate itself may contain an electrode reaction catalytic component and may have a function as an electrode reaction catalyst. Alternatively, the porous substrate may be provided with an electrode reaction catalytic component-containing layer on its surface.

In particular, the electrode preferably includes the porous substrate and the electrode reaction catalytic component-containing layer on a surface of the porous substrate.

The electrode reaction catalytic component may be any component commonly known as a catalytic component of an electrode. Examples thereof include materials similar to the materials of the above-described catalyst layer.

The electrode reaction catalytic component-containing layer may be in any known form. For example, the electrode reaction catalytic component may be fixed in the form of a membrane or particles on a surface of the porous substrate, or a composite in which particles of the electrode reaction catalytic component are dispersed in a resin (binder) may adhere in the form of a membrane or particles on a surface of the porous substrate.

The electrode may have any thickness as long as good electrolysis efficiency is achieved. The thickness may be appropriately designed according to the design of an electrolytic device or electrolytic cell to be used. In order to easily discharge generated gas while the electrode reaction of the electrode is efficiently performed, the thickness of the electrode is preferably 50 $\mu$m or greater, more preferably 75 $\mu$m or greater, still more preferably 100 $\mu$m or greater. If the electrode is too thick, the electrolytic cell is also thick, resulting in an unnecessarily large size of the whole system. In response to this, the thickness is preferably 10 mm or smaller, more preferably 5 mm or smaller, still more preferably 2 mm or smaller.

The electrode can be appropriately produced by a known method. In the present invention, the electrode may be a commercially available product.

<Other layers>

The electrode-integrated diaphragm for alkaline water electrolysis of the present invention may further include an adhesive layer or a second catalyst layer between the ion-permeable membrane and the electrode. The ion-permeable membrane and the electrode may be integrated with each other with such a layer in between.

The adhesive layer is made of an adhesive composition containing a resin component and a solvent.

Examples of the resin component include anion conductive resins such as poly(vinylbenzyltrimethylammonium chloride).

Examples of the solvent include lower alcohols such as methanol, ethanol, and propanol; polar organic solvents such tetrahydrofuran; and solvent mixtures of any of these.

The adhesive layer can be formed by applying the adhesive composition to the ion-permeable membrane or electrode and drying the adhesive composition.

The adhesive layer preferably has a thickness of 10 to 100 $\mu$m, more preferably 10 to 50 $\mu$m.

The second catalyst layer is made of a catalyst layer composition containing a catalytic component, a resin component, and a solvent.

The above-described catalyst layer in the electrode (also referred to as "first catalyst layer") and the second catalyst layer may form a single catalyst layer.

The catalytic component may be any component commonly known as a catalytic component of an electrode. Examples thereof include the above-described materials of the first catalyst layer used for the electrode and platinum on carbon (Pt/C).

Examples of the resin component used for the second catalyst layer include components similar to the resin components used for the above-described adhesive composition.

Examples of the solvent include solvents similar of the solvents used for the above-described adhesive composition.

The second catalyst layer can be formed by applying the catalyst layer composition to the ion-permeable membrane or electrode and drying the catalyst layer composition. The second catalyst layer preferably has a thickness of 10 to 100 $\mu$m, more preferably 10 to 50 $\mu$m.

2. Method of producing an electrode-integrated diaphragm for alkaline water electrolysis

The electrode-integrated diaphragm for alkaline water electrolysis of the present invention may be produced by any method as long as a diaphragm having the above-described structure can be produced. The method may be appropriately selected from known methods. For example, an electrode and an ion-permeable membrane may be integrated with each other in such a way that the electrode and the ion-permeable membrane are separately prepared and they are bonded with an adhesive composition or that the electrode is preheated and then brought into contact with the ion-permeable membrane to melt the resin in the ion-permeable membrane, whereby the ion-permeable membrane is fixed to (partly embedded in) a surface layer of the electrode; an electrode and an ion-permeable membrane may be integrated with each other by heating in such a way that a layer containing a catalytic component is formed on one surface of the ion-permeable membrane and an electrode porous substrate is hot-pressed on the layer (preferably on the surface on which the catalyst layer is formed) and is preferably optionally further pressurized at a higher temperature (high temperature-compressed); or a diaphragm in which an electrode and an ion-permeable membrane are integrated may be produced by forming a coating film of an ion-permeable membrane-forming composition on a surface of the electrode and drying or solidifying the coating film.

In the latter method, the coating film may be formed by directly applying the ion-permeable membrane-forming composition to the electrode surface to form the coating film, or by applying the ion-permeable membrane-forming composition to a support other than the electrode to form the coating film and transferring the coating film to the electrode, for example.

Specifically, the method of producing the diaphragm for alkaline water electrolysis of the present invention preferably includes the following steps (1) to (3):

    (1) preparing an ion-permeable membrane-forming composition containing magnesium hydroxide and an organic polymer resin;
    (2) bringing the ion-permeable membrane-forming composition into contact with an electrode; and
    (3) forming an ion-permeable membrane.

The following describes these steps.

Step (1)

According to the method of producing the diaphragm for alkaline water electrolysis of the present invention, first, an ion-permeable membrane-forming composition for forming an ion-permeable membrane is prepared. The ion-permeable membrane-forming composition is prepared by mixing the above-described magnesium hydroxide and organic polymer resin and an optional solvent as needed. When magnesium hydroxide and the organic polymer resin are mixed, solid magnesium hydroxide may be mixed as it is or a dispersion (slurry) of solid magnesium hydroxide in a solvent may be mixed. Preferably, a dispersion (slurry) of solid magnesium hydroxide in a solvent is mixed. When a dispersion (slurry) of solid magnesium hydroxide in a solvent is mixed with the organic polymer resin, the magnesium hydroxide and the organic polymer resin can be mixed more homogeneously. Thereby, an ion-permeable membrane in which magnesium hydroxide is homogeneously dispersed can be produced. Such an ion-permeable membrane can be prevented from being highly resistant at only part thereof and can have good electrolysis efficiency.

The solvent is preferably one capable of dissolving the organic polymer resin. Examples thereof include N-methyl-2-pyrrolidone, N,N-dimethylacetamide, N,N-dimethylformamide, and dimethyl sulfoxide. Each of these solvents may be used alone or a mixture of two or more of these may be used. In order to achieve good dispersibility of magnesium hydroxide, N-methyl-2-pyrrolidone is preferred among these.

The dispersion preferably contains magnesium hydroxide in an amount of 20 to 80% by mass, more preferably 30 to 70% by mass, still more preferably 40 to 60% by mass.

Magnesium hydroxide may be dispersed in a solvent with, but not limited to, a mixer, a ball mill, a jet mill, a disperser, a sand mill, a roll mill, a pot mill, a paint shaker, or another known mixing and dispersing means.

The organic polymer resin may be mixed as it is with the dispersion or a resin solution of the organic polymer resin in a solvent, which is prepared in advance, may be mixed with the dispersion. In particular, in order to more homogeneously disperse and mix magnesium hydroxide and the organic polymer resin, the resin solution and the dispersion are preferably mixed. Thereby, an ion-permeable membrane in which magnesium hydroxide and the organic polymer resin are homogeneously dispersed can be produced. Such an ion-permeable membrane can be prevented from being highly resistant at only part thereof and can have good electrolysis efficiency.

Any solvent may be used to prepare the resin solution as long as it can dissolve the organic polymer resin, and examples thereof include N-methyl-2-pyrrolidone, N,N-dimethylacetamide, N,N-dimethylformamide, and dimethyl sulfoxide. In order to more homogeneously disperse and mix magnesium hydroxide and the organic polymer resin, the same solvent as the above solvent used to prepare the dispersion is preferably used. Thereby, an ion-permeable membrane in which the organic polymer resin is homogeneously dispersed can be produced. Such an ion-permeable membrane can be prevented from being highly resistant at only part thereof and can have good electrolysis efficiency.

The resin solution preferably contains the organic polymer resin in an amount of 10 to 50% by mass, more preferably 15 to 45% by mass, still more preferably 20 to 40% by mass.

The mixing may be performed with the above-described mixing and dispersing means for magnesium hydroxide.

The dispersion and the organic polymer resin are mixed in such a ratio that the amount of the organic polymer resin is preferably 10 to 40 parts by mass, more preferably 12 to 38 parts by mass, still more preferably 15 to 35 parts by mass relative to 100 parts by mass of magnesium hydroxide.

When the magnesium hydroxide dispersion and the organic polymer resin solution are mixed, the sum of the amount of the solvent in the magnesium hydroxide dispersion and the amount of the solvent in the organic polymer resin solution is preferably 35 to 75% by mass, more preferably 40 to 70% by mass, still more preferably 45 to 65% by mass based on 100% by mass of the total mass of the magnesium hydroxide dispersion and the organic polymer resin solution. Use of the solvents in such proportions is preferred to lead to a diaphragm for alkaline water electrolysis having a porosity within a preferred range.

Step (2)

Subsequently, the ion-permeable membrane-forming composition prepared in the step (1) is brought into contact with an electrode.

The ion-permeable membrane-forming composition is brought into contact with the electrode in such a way that, for example, the ion-permeable membrane-forming composition is applied to at least part of a surface of the electrode or the ion-permeable membrane-forming composition is applied to a substrate and the electrode is placed on the applied composition. When the ion-permeable membrane includes the porous support, the ion-permeable membrane-forming composition is applied to at least part of a surface of the electrode and the porous support is placed on and impregnated with the applied composition; the porous support is placed on the electrode, the ion-permeable membrane-forming composition is applied to the porous support, and the porous support is impregnated with the composition; or the ion-permeable membrane-forming composition is applied to a substrate, the porous support is placed on and impregnated with the applied composition, and the electrode is placed on the porous support.

In particular, in order to obtain a diaphragm for alkaline water electrolysis in which the ion-permeable membrane and the electrode are sufficiently bonded to be integrated and which has excellent durability and high electrolysis efficiency, preferably, the ion-permeable membrane-forming composition is applied to a substrate, the porous support is placed on and impregnated with the applied composition, and the electrode is placed on the porous support. When the electrode is placed on the porous support, part of the electrode may be immersed in the ion-permeable membrane-forming composition.

The ion-permeable membrane-forming composition may be applied by, but not limited to, a known application technique such as by die coating, spin coating, gravure coating, curtain coating, or a technique with a spray, applicator, or coater.

The substrate may be any one on which a coating film can be formed by applying the ion-permeable membrane-forming composition, and examples thereof include a film or sheet made of resin such as polyethylene terephthalate, polyethylene naphthalate, polypropylene, polyethylene, polyvinyl chloride, polyvinyl acetal, polymethyl methacrylate, or polycarbonate and a glass sheet. In order to reduce raw material cost, a film or sheet made of polytetraethylene terephthalate is preferred among these.

Any amount of the ion-permeable membrane-forming composition may be applied. The amount may be appropriately designed so that an ion-permeable membrane having a desired thickness can be formed.

A preferred method of bringing the ion-permeable membrane-forming composition into contact with the electrode is to apply the ion-permeable membrane-forming composition to at least part of a surface of the electrode. A preferred method of applying the ion-permeable membrane-forming composition to at least part of a surface of the electrode is to apply the ion-permeable membrane-forming composition to an electrode impregnated with water in advance, for example. Since the ion-permeable membrane-forming composition solidifies when it comes into contact with water, the ion-permeable membrane-forming composition applied to an electrode impregnated with water in advance does not penetrate into the lower part of the electrode in which water is present, but solidifies and remains on the surface of the electrode. The ion-permeable membrane-forming composition in such a state is dried or coagulated as described later. Thereby, an ion-permeable membrane in which part of the electrode is embedded can be suitably formed. As described above, in a preferred embodiment, the step (2) includes a step (2-1) of impregnating the electrode with water and a step (2-2) of applying the ion-permeable membrane-forming composition to the electrode.

The electrode may be impregnated with water by any method. For example, water may be applied to a standing electrode by a known means or an electrode may be immersed in water. Any water may be used such as tap water, distilled water, or ion exchange water. Ion exchange water is preferred.

After the electrode is impregnated with water, excess water may be removed to control the water filling percentage of the electrode described below, for example. In other words, after the step of impregnating the electrode with water, part of water in the electrode impregnated with water may be removed.

Part of water in the electrode impregnated with water may be removed by any method. For example, water is absorbed by bringing the upper surface of the electrode containing water into contact with a material that easily absorbs water, such as paper; water is removed by blowing compressed air; or moisture is evaporated by heating with a heater or the like.

If water is removed too much, the ion-permeable membrane-forming composition applied may permeate into the lower part of the electrode, which may cause a failure in preferable production of an electrode-integrated diaphragm for alkaline water electrolysis.

When the ion-permeable membrane-forming composition is brought into contact with the electrode in the step (2), the electrode preferably has a water filling percentage of 10 to 80% by volume, more preferably 20 to 60% by volume relative to 100% by volume of the vacant spaces in the electrode. The electrode having a water filling percentage within the above-described ranges adheres well to the ion-permeable membrane and can provide a diaphragm for alkaline water electrolysis having much better electrolysis efficiency.

In the case of the step (2) including the steps (2-1) and (2-2), for example, the electrode to which the ion-permeable membrane-forming composition is to be applied in the step (2-2) preferably has a water filling percentage within the above-described ranges.

The water filling percentage refers to the percentage of vacant spaces (% by volume) replaced with water relative to 100% by volume of the vacant spaces in the electrode. The water filling percentage can be calculated by the following formula.

$$\text{Water filling percentage (\%)} = \{(\text{Weight of electrode impregnated with water (g)}) - (\text{Weight of dried electrode (g)})\} \div (\text{Specific gravity of water (1 g/cm}^3)) \div \{(\text{Volume of electrode (cm}^3)) \times (\text{Percentage of vacant spaces in electrode (\%)})\}$$

The percentage of vacant spaces in electrode can be calculated by the following formula.

$$\text{Percentage of vacant spaces in electrode (\%)} = 1 -$$
$$\{(\text{Bulk density of electrode (g/cm}^3)) \div (\text{True density of}$$
$$\text{electrode (g/cm}^3))\}$$

Step (3)

After bringing the ion-permeable membrane-forming composition into contact with the electrode in the step (2), an ion-permeable membrane is formed. The ion-permeable membrane may be formed by any known method. For example, the ion-permeable membrane-forming composition and the electrode brought into contact with each other in the step (2) are dried or coagulated by bringing these into contact with a non-solvent such as water.

In particular, in order to obtain a diaphragm having excellent ion permeability, gas barrier properties, and electrolysis efficiency, the ion-permeable membrane is preferably formed by bringing the ion-permeable membrane-forming composition into contact with a non-solvent such as water to be coagulated (non-solvent-induced phase separation).

When the applied ion-permeable membrane-forming composition is brought into contact with a non-solvent, the non-solvent disperses in the applied composition, and the organic polymer resin, which is insoluble in the non-solvent, coagulates. On the other hand, the solvent soluble in the non-solvent in the applied composition is dissolved out from the applied composition. Thus, phase separation occurs, leading to coagulation of the organic polymer resin. Thereby, a porous membrane is formed. The applied composition may be brought into contact with a non-solvent, for example, by immersing the applied composition into the non-solvent (coagulation bath).

The non-solvent may be any solvent that does not substantially dissolve the organic polymer resin, and examples thereof include water such as distilled water and ion exchange water; lower alcohols such as methanol, ethanol, and propanol; and mixtures of any of these solvents. In terms of economic efficiency and liquid waste disposal, water is preferred and ion exchange water is more preferred among these. The non-solvent may contain a small amount of the same solvent as the solvent contained in the applied composition in addition to the above components.

The non-solvent is preferably used in an amount of 50 to 10000% by mass relative to 100% by mass of the ion-permeable membrane, i.e., 100% by mass of the solids in the ion-permeable membrane-forming composition used to form the ion-permeable membrane. The amount of the non-solvent is more preferably 100 to 5000% by mass, still more preferably 200 to 1000% by mass. In order to control the porosity of the ion-permeable membrane to be obtained to fall within the preferred range, use of such a proportion of the non-solvent is preferred.

After the step (3), the non-solvent is preferably removed by drying the coagulated membrane.

The drying may be performed under any condition that is appropriately designed according to the size or other characteristics of the ion-permeable membrane to be obtained. For example, the drying may preferably be performed for 2 to 120 minutes, more preferably 5 to 60 minutes, still more preferably 10 to 30 minutes at 60°C to 80°C.

When the ion-permeable membrane and the electrode are separately prepared and they are integrated with each other to produce the diaphragm, the ion-permeable membrane is preferably produced as in the production method including the steps (1) to (3), except that no electrode is used in the step (2). For example, the ion-permeable membrane can be formed in such a way that a workpiece prepared by applying the ion-permeable membrane-forming composition to a substrate or a workpiece prepared by impregnating the porous support with the ion-permeable membrane-forming composition is dried or coagulated by bringing the workpiece into contact with the non-solvent.

When the electrode is preheated and then brought into contact and integrated with the ion-permeable membrane, the electrode is preferably heated at the melting point of the resin component in the ion-permeable membrane or higher. The heating temperature is, for example, 200°C or higher, more preferably 200°C to 300°C.

The ion-permeable membrane can be made to adhere to the electrode with an adhesive composition as follows: the adhesive composition is applied to one surface of the ion-permeable membrane or electrode, the applied composition is brought into contact with the electrode or ion-permeable membrane and is dried. Thereby, the electrode and the ion-permeable membrane can be integrated with each other. The adhesive composition may be the above-described adhesive composition. The amount of the adhesive composition to be applied may be appropriately designed. The drying may be performed under any condition, and is preferably performed at a temperature of 50°C to 100°C, more preferably 80°C to 100°C. The drying is preferably performed for 1 to 10 minutes, more preferably 1 to 5 minutes.

When the catalyst layer formed on the ion-permeable membrane or electrode is brought into contact with the ion-permeable membrane or electrode, and they are hot-pressed to be integrated, the temperature is preferably 200°C to 300°C, more preferably 220°C to 280°C. The pressure is preferably 0.01 to 3 MPa, more preferably 0.05 to 2 MPa.

The above-described method can easily produce the electrode-integrated diaphragm for alkaline water electrolysis of the present invention.

The electrode-integrated diaphragm for alkaline water electrolysis of the present invention, in which the distance between electrodes can be small, can have reduced electrical resistance. Further, the presence of the diaphragm having excellent ion permeability and gas barrier properties achieves excellent electrolysis efficiency. Thus, the diaphragm has excellent electrolysis efficiency. The diaphragm also has high-temperature resistance, alkali resistance, and excellent durability. Such an electrode-integrated diaphragm for alkaline water electrolysis of the present invention can be used for applications that require ion permeability, gas barrier properties, durability, high electrolysis efficiency, or other properties. In particular, the diaphragm can be suitable for a diaphragm for alkaline water electrolysis.

3. Water electrolysis device

The electrode-integrated diaphragm for alkaline water electrolysis of the present invention can be used for a water electrolysis device. A water electrolysis device including the above-described electrode-integrated diaphragm for alkaline water electrolysis is one aspect of the present invention.

The water electrolysis device of the present invention may include other necessary components known in the technical field as long as it includes the above-described electrode-integrated diaphragm for alkaline water electrolysis. The other components are appropriately placed. The water electrolysis device of the present invention preferably includes the above-described electrode-integrated diaphragm for alkaline water electrolysis and an electrolytic cell.

When the electrode-integrated diaphragm for alkaline water electrolysis includes either a cathode or anode, the water electrolysis device preferably further includes an electrode paired with the cathode or anode.

When the water electrolysis device includes a cathode-integrated diaphragm for alkaline water electrolysis, for example, an exemplary specific structure of the water electrolysis device is a structure in which the diaphragm for alkaline water electrolysis is placed in an electrolytic cell and an anode is placed at the side or surface of the diaphragm opposite to the surface to which the cathode is attached. The diaphragm for alkaline water electrolysis is preferably placed in the electrolytic cell such that the cathode compartment is isolated from the anode compartment with the diaphragm in between.

The water electrolysis device may include an inlet for injecting water (electrolyte solution) and an outlet for discharging oxygen or hydrogen gas generated.

(Method of electrolysis)

Water electrolysis using the water electrolysis device of the present invention may be performed by any known method. For example, in the water electrolysis device of the present invention, an electrolytic cell may be filled with an electrolyte solution such that at least part of an electrode is immersed in the electrolyte solution and a current may be applied to the electrolyte solution.

The electrolyte solution is preferably an alkaline aqueous solution in which an electrolyte such as potassium hydroxide or sodium hydroxide is dissolved. The concentration of the electrolyte in the electrolyte solution is preferably, but not limited to, 20 to 40% by mass for further improvement in the electrolysis efficiency.

The electrolysis is preferably performed at 40°C to 120°C, more preferably 50°C to 120°C, still more preferably 80°C to 100°C for further improvement in the ion conductivity of the electrolyte solution and further improvement in the electrolysis efficiency. The current may be applied under known conditions and by a known method. The current usually has a current density of 0.2 A/cm$^2$ or higher, preferably 0.3 A/cm$^2$ or higher. When current having a higher current density is applied, larger amounts of hydrogen and oxygen can be obtained in a short time, leading to efficient production of hydrogen. If, however, the current density is too high, the generated hydrogen and oxygen adhere to the ion-permeable membrane or electrodes to inhibit the reaction and the overvoltage increases due to the electrode reaction resistance. This causes an increase in electrolysis voltage and an increase in the amount of power required for electrolysis, leading to poor electrolytic efficiency. In response to this, the electrolysis voltage is preferably adjusted to about 2 V, e.g., within the range of 1.5 to 2.5 V, so that the current density is increased.

As described above, the electrode-integrated diaphragm for alkaline water electrolysis of the present invention has excellent electrolysis efficiency. The electrode-integrated diaphragm for alkaline water electrolysis of the present invention is particularly suitable as a diaphragm for alkaline water electrolysis.

EXAMPLES

Hereinafter, the present invention will be described in more detail based on the examples which, however, are not intended to limit the scope of the present invention. Here, "part(s)" refers to "part(s) by mass" and "%" refers to "% by mass", unless otherwise specified.

In EXAMPLES, the electrical characteristics were evaluated in the following way.

(Evaluation of electrical characteristics)

As for a cathode-integrated diaphragm for alkaline water electrolysis prepared, alkaline water electrolysis was evaluated. An anode was a platinum mesh cut into a 3 cm $\times$ 3 cm piece (The Nilaco Corporation, product number: PT-358056/55 mesh). The platinum mesh was placed on the surface of the cathode-integrated diaphragm for alkaline water electrolysis opposite to the surface provided with the cathode so as to be in contact with an ion-permeable membrane. To prevent misalignment of the platinum mesh during assembling an electrolytic cell, the four corners of the platinum mesh were fixed to the ion-permeable membrane with glue (Tombow Pencil Co., Ltd., Kieiro PiT) soluble in an alkaline aqueous solution. The electrolytic cell was assembled such that the diaphragm separated a cathode compartment and an anode compartment. An aqueous solution of potassium hydroxide with a concentration of 30% by weight was used as an electrolyte solution.

First, the electrolytic cell was filled with the electrolyte solution and the electrolyte solution was circulated and heated to control the temperature of the solution to 40°C. The temperature was measured with a thermometer attached to the near side of the inlet of the solution into the electrolytic cell. After a lapse of 30 minutes or longer from the time at which the temperature of the electrolyte solution reached 40°C, a current having a current density of 0.3 A/cm$^2$ was applied under constant current density conditions continuously for 10 minutes. Thereafter, the current density was increased to 0.5 A/cm$^2$ and the voltage was recorded every minute. The voltage values at five consecutive points were collected and the voltage was maintained until each voltage value was stabilized within $\pm$ 3% of the average of the values at the five points. After confirming that the voltage was stabilized, the voltage was measured every minute at 10 points, and the resulting voltage values at 10 points were averaged.

Also, as for an anode-integrated diaphragm for alkaline water electrolysis, alkaline water electrolysis was evaluated as in the above-described manner, except that a nickel mesh was used as a cathode. Thus, the electrical characteristics were evaluated.

<Example 1>

(Preparation of magnesium hydroxide dispersion)

Magnesium hydroxide (Kyowa Chemical Industry Co., Ltd., product number: 200-06H, average particle size: 0.54 $\mu$m, aspect ratio: 3.52, crystallite size in the direction perpendicular to the (110) plane: 70.7 nm) and N-methyl-2-pyrrolidone (Fujifilm Wako Pure Chemical Corporation) were mixed in a mass ratio of 1:1, and they were dispersed in a pot mill containing zirconia media balls at room temperature for six hours. Thus, a magnesium hydroxide dispersion was prepared.

(Preparation of polysulfone resin solution)

Polysulfone resin (PSU) (BASF Japan Ltd., product number: Ultrason S3010) and N-methyl-2-pyrrolidone (Wako Pure Chemical Industries, Ltd.) were mixed in a mass ratio of 3:7 to prepare a polysulfone resin solution. Specifically, N-methyl-2-pyrrolidone in an amount to be charged was placed in a separable flask, and the liquid was heated to 80°C while stirring with a stirring blade. After the temperature of the liquid reached 80°C, a quarter of a total amount to be charged of the resin was dissolved in the liquid. After visually confirming that the polysulfone resin was dissolved, another quarter of the total amount to be charged of the resin was dissolved in the liquid again. This operation was repeated so that the total amount to be charged of the resin was dissolved. After visually confirming that the total amount to be charged of the polysulfone resin was dissolved, the solution was stirred for one hour while the temperature was kept at 80°C, and then the solution was cooled to room temperature. Thus, a polysulfone resin solution was prepared.

(Preparation of ion-permeable membrane-forming composition)

The magnesium hydroxide dispersion and the polysulfone resin solution prepared above in amounts that satisfy the ratio of 33 parts by mass of the polysulfone resin to 100 parts by mass of the magnesium hydroxide were mixed with a planetary centrifugal mixer (Thinky Corporation, product number: Awatori Rentaro ARE-500) at 1000 rpm at room temperature for about 10 minutes. The resulting liquid mixture was filtered through a 200-mesh stainless steel screen to give a coating liquid of an ion-permeable membrane-forming composition.

(Preparation of cathode-integrated diaphragm for alkaline water electrolysis)

A diaphragm combined (integrated) with an electrode was prepared using a nickel mesh (The Nilaco Corporation, product number: NI-318040/40 mesh, wire diameter: about 150 $\mu$m) as a cathode. First, the coating liquid of an ion-permeable membrane-forming composition prepared above was applied to a polyethylene terephthalate (PET) film with an applicator in an amount such that the weighed value of the coating liquid after drying was about 12.0 mg/cm². A polypropylene non-woven fabric (Japan Vilene Company, Ltd., product number: OA16728F, thickness: 160 μm, cut size: 6 × 6 cm) was placed on and brought into contact with the applied solution, and a nickel mesh cut into a 3 cm × 3 cm piece was placed on and brought into contact with the non-woven fabric. The non-woven fabric was completely impregnated with the coating liquid, while part of the nickel mesh was exposed to the surface. Thereafter, the non-woven fabric-nickel mesh composite impregnated with the coating liquid was put in a water bath together with the PET film at room temperature for 10 minutes to coagulate the coating liquid. Thereby, a membrane was formed. Subsequently, the non-woven fabric-nickel mesh composite was separated from the PET film in water. After water bathing, the resulting non-woven fabric-nickel mesh composite was dried with a dryer at 80°C for 30 minutes to remove moisture. After drying, the composite was cut into a 5 cm × 5 cm piece such that the center thereof corresponded to the center of the nickel mesh (3 cm × 3 cm) of the composite. Thus, an electrode-integrated diaphragm for alkaline water electrolysis including a composite of the ion-permeable membrane containing the non-woven fabric, magnesium hydroxide and a polysulfone resin, and the nickel mesh electrode was obtained. The thickness of the ion-permeable membrane of the diaphragm was measured with a micrometer (Mitutoyo Corporation, model number: MDC-25MX) and found to be 300 μm.

The electrical characteristics of the electrode-integrated diaphragm for alkaline water electrolysis were evaluated by the above method. The results are shown in Table 1.

<Example 2>

A cathode-integrated diaphragm for alkaline water electrolysis was obtained as in Example 1, except that polyethersulfone (PESU) (BASF Japan Ltd., Ultrason E3010) was used instead of the polysulfone resin in the process (Preparation of polysulfone resin solution) in Example 1. The ion-permeable membrane of the diaphragm had a thickness of 300 μm. The electrical characteristics of the diaphragm were evaluated as in Example 1. The results are shown in Table 1.

<Example 3>

A cathode-integrated diaphragm for alkaline water electrolysis was obtained as in Example 1, except that a polyphenylene sulfide non-woven fabric (Toray Industries, Inc., product name: TORCONT paper #100, thickness: 200 μm, mass per unit area: 100 g/m²) was used instead of the polypropylene non-woven fabric in the process (Preparation of cathode-integrated diaphragm for alkaline water electrolysis) in Example 1. The ion-permeable membrane of the diaphragm had a thickness of 300 μm. The electrical characteristics of the diaphragm were evaluated as in Example 1. The results are shown in Table 1.

<Example 4>

A cathode-integrated diaphragm for alkaline water electrolysis was obtained as in Example 1, except that a nickel expanded metal (mesh size: SW = 1 mm, LW = 2 mm, t = 0.2 mm) was used instead of the nickel mesh in the process (Preparation of cathode-integrated diaphragm for alkaline water electrolysis) in Example 1. The ion-permeable membrane of the diaphragm had a thickness of 300 μm. The electrical characteristics of the diaphragm were evaluated as in Example 1. The results are shown in Table 1.

<Example 5>

The process (Preparation of cathode-integrated diaphragm for alkaline water electrolysis) in Example 1 was performed in the following way.

First, a nickel mesh cut into a 3 cm × 3 cm piece was stacked on a PET film. A polypropylene non-woven fabric (Japan Vilene Company, Ltd., product number: OA16728F, thickness: 160 μm, cut size: 6 × 6 cm) was stacked thereon. The coating liquid was applied thereto with an applicator in an amount such that the weighed value of the coating liquid after drying was about 12.0 mg/cm². Thereby, the fabric was impregnated with the coating liquid. Then, the non-woven fabric-nickel mesh composite impregnated with the coating liquid was put in a water bath together with the PET film at room temperature for 10 minutes to coagulate the coating liquid. Thereby, a membrane was formed. The membrane was separated from the PET film in water. After water bathing, the resulting membrane was dried with a dryer at 80°C for 30 minutes. Thus, a cathode-integrated diaphragm for alkaline water electrolysis including a composite of the ion-permeable membrane containing the non-woven fabric, magnesium hydroxide and a polysulfone resin, and the nickel mesh electrode was obtained. The thickness of the ion-permeable membrane of the diaphragm was 300 μm. The electrical characteristics of the diaphragm were evaluated as in Example 1. The results are shown in Table 1.

<Example 6>

(Preparation of anode-integrated diaphragm for alkaline water electrolysis)

An anode-integrated diaphragm for alkaline water electrolysis including a composite of an ion-permeable membrane and a nickel mesh electrode was obtained as in Example 1, except that a nickel mesh was used as an anode. The ion-permeable membrane of the diaphragm had a thickness of 300 $\mu$m. The electrical characteristics of the diaphragm were evaluated by the above method. The results are shown in Table 1.

<Example 7>

(Preparation of anode-integrated diaphragm for alkaline water electrolysis)

An anode-integrated diaphragm for alkaline water electrolysis including a composite of an ion-permeable membrane and a nickel mesh electrode was obtained as in Example 3, except that a nickel mesh was used as an anode. The ion-permeable membrane of the diaphragm had a thickness of 300 $\mu$m. The electrical characteristics of the diaphragm were evaluated by the above method. The results are shown in Table 1.

<Example 8>

A cathode-integrated diaphragm for alkaline water electrolysis was obtained as in Example 1, except that a polyphenylene sulfide non-woven fabric (Toray Industries, Inc., product name: TORCONT paper #40, thickness: 87 $\mu$m, mass per unit area: 40 g/m$^2$) was used instead of the polypropylene non-woven fabric in the process (Preparation of cathode-integrated diaphragm for alkaline water electrolysis) in Example 1. The ion-permeable membrane of the diaphragm had a thickness of 240 $\mu$m. The electrical characteristics of the diaphragm were evaluated by the above method. The results are shown in Table 1.

<Example 9>

A cathode-integrated diaphragm for alkaline water electrolysis including a composite of an electrode and an ion-permeable membrane with no non-woven fabric was obtained in the following way.
In other words, first, an ion-permeable membrane-forming composition was prepared as in Example 1. Then, water was dropped on a nickel mesh (10 cm × 10 cm) placed on a flat and smooth glass substrate with a 10-g dropper and applied thereto, and the mesh was impregnated with water. Then, a paper waste cloth (Nippon Paper Crecia Co., Ltd., Kimwipes S-200, 12 cm × 21.5 cm) was placed on and brought into contact with the nickel mesh and pressed with a rubber roller. Thereby, water was absorbed by the cloth so that excess water on the nickel mesh was removed. This water absorbing operation was performed five times using a new paper waste cloth each time. As a result, the percentage of the volume of the voids filled with water in the nickel mesh was 40% by volume relative to 100% by volume of the voids in the nickel mesh.
Thereafter, the ion-permeable membrane-forming composition was applied to the nickel mesh with an applicator in an amount such that the weighed value of the coating liquid after drying was about 12.0 mg/cm$^2$. Then, the nickel mesh impregnated with water and the coating liquid was put in a water bath at room temperature for 10 minutes to coagulate the coating liquid. Thereby, a membrane was formed. The nickel mesh with the membrane was dried with a dryer at 80°C for 30 minutes to remove moisture and cut into a 3 cm × 3 cm piece. Thus, a cathode-integrated diaphragm for alkaline water electrolysis including a composite of an ion-permeable membrane and an electrode was obtained. The ion-permeable membrane of the diaphragm had a thickness of 190 $\mu$m. The electrical characteristics of the diaphragm were evaluated by the above method. The results are shown in Table 1.

<Example 10>

A cathode-integrated diaphragm for alkaline water electrolysis was obtained as in Example 3, except that the coating liquid was applied in an amount such that the weighed value of the coating liquid after drying was about 6.0 mg/cm$^2$ in the process (Preparation of cathode-integrated diaphragm for alkaline water electrolysis). The ion-permeable membrane of the diaphragm had a thickness of 200 $\mu$m. The electrical characteristics of the diaphragm were evaluated by the above method. The results are shown in Table 1.

<Example 11>

A cathode-integrated diaphragm for alkaline water electrolysis including a composite of an electrode and an ion-permeable membrane including a non-woven fabric was obtained in the following way.

First, an ion-permeable membrane-forming composition was prepared as in Example 1.

Then, the coating liquid of the ion-permeable membrane-forming composition was directly applied to a polyphenylene sulfide non-woven fabric (Toray Industries, Inc., product name: TORCONT paper #100, thickness: 200 $\mu$m, mass per unit area: 100 g/m$^2$) with an applicator in an amount such that the weighed value of the coating liquid after drying was about 12.0 mg/cm$^2$. Thereafter, the non-woven fabric impregnated with the coating liquid was put in a water bath at room temperature for 10 minutes to coagulate the coating liquid. Thereby, a membrane was formed. After water bathing, the non-woven fabric with the membrane was dried with a dryer at 80°C for 30 minutes to remove moisture and cut into a 6 cm × 6 cm piece. Thus, an ion-permeable membrane including the non-woven fabric, magnesium hydroxide and a polysulfone resin was obtained. Then, a nickel mesh (3 cm × 3 cm) as a cathode was heated to 200°C and brought into contact with the ion-permeable membrane such that their centers corresponded to each other. Thereby, the nickel mesh was fused. Thus, a cathode-integrated diaphragm for alkaline water electrolysis including a composite of an ion-permeable membrane and an electrode was obtained. The ion-permeable membrane of the diaphragm had a thickness of 300 $\mu$m. The electrical characteristics of the diaphragm were evaluated by the above method. The results are shown in Table 1.

<Example 12>

An ion-permeable membrane (6 cm × 6 cm) was prepared as in Example 11. Separately, 40 parts of a platinum on carbon (TEC10E50E, Tanaka Kikinzoku Kogyo K.K.), 2 parts of an anion conductive resin (poly(vinylbenzyltrimethylammonium chloride)), and 94 parts of a solvent (1-propanol:tetrahydrofuran = 1:1 (mass ratio)) were mixed to prepare a catalyst layer composition. Then, the catalyst layer composition was applied to the 3 cm × 3 cm area at the center of one surface of the ion-permeable membrane with an applicator in an amount such that the weighed value of the coating liquid after drying was 0.5 mg/cm$^2$, and the composition was dried at 80°C for 10 minutes. Thereby, a catalyst layer was formed. Then, a nickel mesh (3 cm × 3 cm) as a cathode was heated to 250°C and brought into contact with the surface of the catalyst layer on the ion-permeable membrane such that their centers corresponded to each other, and the mesh was made to adhere by pressurizing at 0.5 MPa using a hot-pressing apparatus. Thus, a cathode-integrated diaphragm for alkaline water electrolysis including a composite of an ion-permeable membrane and an electrode was obtained. The ion-permeable membrane of the diaphragm had a thickness of 300 $\mu$m. The electrical characteristics of the diaphragm were evaluated by the above method. The results are shown in Table 1.

<Example 13>

An ion-permeable membrane (6 cm × 6 cm) was prepared as in Example 11. Separately, 2 parts of an anion conductive resin (poly(vinylbenzyltrimethylammonium chloride)) and 98 parts of a solvent (1-propanol:tetrahydrofuran = 1:1 (mass ratio)) were mixed to prepare an adhesive composition. The adhesive composition was applied to the 3 cm × 3 cm area at the center of one surface of the ion-permeable membrane with an applicator in an amount such that the weighed value of the composition after drying was 0.5 mg/cm$^2$. A nickel mesh (3 cm × 3 cm) as a cathode was placed on the applied composition such that the center of the mesh corresponded to the center of the ion-permeable membrane. Then, the nickel mesh was made to adhere by drying at 100°C for one minute. Thus, a cathode-integrated diaphragm for alkaline water electrolysis was obtained. The ion-permeable membrane of the diaphragm had a thickness of 300 $\mu$m. The electrical characteristics of the diaphragm were evaluated by the above method.

The results are shown in Table 1.

<Example 14>

A cathode-integrated diaphragm for alkaline water electrolysis was obtained as in Example 10, except that magnesium hydroxide (average particle size: 0.2 $\mu$m) was used. The ion-permeable membrane of the diaphragm had a thickness of 300 $\mu$m. The electrical characteristics of the diaphragm were evaluated by the above method. The results are shown in Table 1.

<Comparative Example 1>

A diaphragm for alkaline water electrolysis was prepared in the following way using no nickel mesh in the process (Preparation of cathode-integrated diaphragm for alkaline water electrolysis) in Example 1.

The coating liquid was applied to a PET film with an applicator in an amount such that the weighed value of the coating liquid after drying was about 12.0 mg/cm$^2$. A polypropylene non-woven fabric (Japan Vilene Company, Ltd., product number: OA16728F, thickness: 160 $\mu$m, cut size: 6 × 6 cm) was placed thereon and brought into contact therewith. Thereby, the fabric was impregnated with the coating liquid. Thereafter, the non-woven fabric impregnated with the coating liquid was put in a water bath together with the PET film at room temperature for 10 minutes to coagulate the coating liquid. Thereby, a membrane was formed. The resulting membrane was separated from the PET film in water. After water bathing, the resulting membrane was dried with a dryer at 80°C for 30 minutes. Thus, a diaphragm for alkaline water electrolysis including a composite of the non-woven fabric and the membrane containing magnesium hydroxide and a polysulfone resin was obtained. In other words, a diaphragm for alkaline water electrolysis consisting only of an ion-permeable membrane not combined with a nickel mesh was obtained. The diaphragm had a thickness of 300 $\mu$m.

In the process (Evaluation of electrical characteristics), a nickel mesh cut into a 3 cm × 3 cm piece was placed as a cathode on one surface of the diaphragm for alkaline water electrolysis, and a platinum mesh cut into a 3 cm × 3 cm piece was placed as an anode on the other surface thereof. To prevent misalignment of the nickel mesh and the platinum mesh during assembling an electrolytic cell, the four corners of each of the nickel mesh and the platinum mesh were fixed to the ion-permeable membrane with glue (Tombow Pencil Co., Ltd., Kieiro PiT) soluble in an alkaline aqueous solution, and an electrolytic cell was assembled. The electrolytic cell was subjected to alkaline water electrolysis evaluation. The results are shown in Table 1.

<Comparative Example 2>

A diaphragm for alkaline water electrolysis was prepared in the following way using no nickel mesh in the process (Preparation of cathode-integrated diaphragm for alkaline water electrolysis) in Example 3.

The coating liquid was applied to a PET film with an applicator in an amount such that the weighed value of the coating liquid after drying was about 12.0 mg/cm$^2$. A polyphenylene sulfide non-woven fabric (Toray Industries, Inc., product name: TORCONT paper #100, thickness: 20 $\mu$m, mass per unit area: 100 g/m$^2$) was placed thereon and brought into contact therewith. Thereby, the fabric was impregnated with the coating liquid. Then, the non-woven fabric impregnated with the coating liquid was put in a water bath together with the PET film at room temperature for 10 minutes to coagulate the coating liquid. Thereby, a membrane was formed. The resulting membrane was separated from the PET film in water. After water bathing, the resulting membrane was dried with a dryer at 80°C for 30 minutes. Thus, a diaphragm for alkaline water electrolysis including a composite of the non-woven fabric and the membrane containing magnesium hydroxide and a polysulfone resin was obtained. In other words, a diaphragm for alkaline water electrolysis consisting only of an ion-permeable membrane not combined with a nickel mesh was obtained. The diaphragm had a thickness of 300 $\mu$m.

In the process (Evaluation of electrical characteristics), a nickel mesh cut into a 3 cm × 3 cm piece was placed as a cathode on one surface of the diaphragm for alkaline water electrolysis, and a platinum mesh cut into a 3 cm × 3 cm piece was placed as an anode on the other surface thereof. To prevent misalignment of the nickel mesh and the platinum mesh during assembling an electrolytic cell, the four corners of each of the nickel mesh and the platinum mesh were fixed to the ion-permeable membrane with glue (Tombow Pencil Co., Ltd., Kieiro PiT) soluble in an aqueous alkaline solution, and an electrolytic cell was assembled. The electrolytic cell was subjected to alkaline water electrolysis evaluation. The results are shown in Table 1.

<Comparative Example 3>

A diaphragm for alkaline water electrolysis was prepared in the following way using no nickel mesh in the process (Preparation of cathode-integrated diaphragm for alkaline water electrolysis) in Example 1.

The coating liquid was applied to a PET film with an applicator in an amount such that the weighed value of the coating liquid after drying was about 12.0 mg/cm$^2$. A polypropylene non-woven fabric (Japan Vilene Company, Ltd., product number: OA16728F, thickness: 160 $\mu$m, cut size: 6 × 6 cm) was placed thereon and brought into contact therewith. Thereby, the fabric was impregnated with the coating liquid. Then, the non-woven fabric impregnated with the coating liquid was put in a water bath together with the PET film at room temperature for 10 minutes to coagulate the coating liquid. Thereby, a membrane was formed. The resulting membrane was separated from the PET film in water. After water bathing, the resulting membrane was dried with a dryer at 80°C for 30 minutes. Thus, a diaphragm for alkaline water electrolysis including a composite of the non-woven fabric and the membrane containing magnesium hydroxide and a polysulfone resin was obtained. In other words, a diaphragm for alkaline water electrolysis consisting only of an ion-permeable membrane not combined with a nickel mesh was obtained. The diaphragm had a thickness of 300 $\mu$m.

In the process (Evaluation of electrical characteristics), a nickel mesh cut into a 3 cm × 3 cm piece was placed as a cathode on one surface of the diaphragm for alkaline water electrolysis, and another nickel mesh cut into a 3 cm × 3 cm piece was placed as an anode on the other surface thereof. To prevent misalignment of the nickel meshes during assembling an electrolytic cell, the four corners of each of the nickel meshes as the cathode and anode were fixed to the ion-permeable membrane with glue (Tombow Pencil Co., Ltd., Kieiro PiT) soluble in an alkaline aqueous solution, and an electrolytic cell was assembled. The electrolytic cell was subjected to alkaline water electrolysis evaluation. The results are shown in Table 1.

The nickel meshes and platinum meshes used as electrodes in the examples and comparative examples are as follows.

Each nickel mesh is available from The Nilaco Corporation (product number NI-318040/40 mesh, wire diameter about 150 μm).

Each platinum mesh is available from The Nilaco Corporation (product number PT-358056/55 mesh).

[Table 1]

| | Organic polymer resin | Porous support | Cathode | Anode | Cell voltage (V) | Combined |
|---|---|---|---|---|---|---|
| Example 1 | Polysulfone | Polypropylene | Nickel mesh | Platinum mesh | 1.89 | Present |
| Example 2 | Polyethersulfone | Polypropylene | Nickel mesh | Platinum mesh | 1.95 | Present |
| Example 3 | Polysulfone | Polyphenylene sulfide | Nickel mesh | Platinum mesh | 1.94 | Present |
| Example 4 | Polysulfone | Polypropylene | Nickel expanded metal | Platinum mesh | 1.98 | Present |
| Example 5 | Polysulfone | Polypropylene | Nickel mesh | Platinum mesh | 1.97 | Present |
| Example 6 | Polysulfone | Polypropylene | Nickel mesh | Nickel mesh | 2.10 | Present |
| Example 7 | Polysulfone | Polyphenylene sulfide | Nickel mesh | Nickel mesh | 2.14 | Present |
| Example 8 | Polysulfone | Polyphenylene sulfide | Nickel mesh | Platinum mesh | 1.87 | Present |
| Example 9 | Polysulfone | - | Nickel mesh | Platinum mesh | 1.81 | Present |
| Example 10 | Polysulfone | Polyphenylene sulfide | Nickel mesh | Platinum mesh | 1.86 | Present |
| Example 11 | Polysulfone | Polyphenylene sulfide | Nickel mesh | Platinum mesh | 1.99 | Present |
| Example 12 | Polysulfone | Polyphenylene sulfide | Nickel mesh | Platinum mesh | 1.93 | Present |
| Example 13 | Polysulfone | Polyphenylene sulfide | Nickel mesh | Platinum mesh | 1.95 | Present |
| Example 14 | Polysulfone | Polyphenylene sulfide | Nickel mesh | Platinum mesh | 1.84 | Present |
| Comparative Example 1 | Polysulfone | Polypropylene | Nickel mesh | Platinum mesh | 2.11 | Absent |
| Comparative Example 2 | Polysulfone | Polyphenylene sulfide | Nickel mesh | Platinum mesh | 2.10 | Absent |
| Comparative Example 3 | Polysulfone | Polypropylene | Nickel mesh | Nickel mesh | 2.30 | Absent |

Table 1 demonstrates that the diaphragms in the respective examples prepared by compositing (integrating) the ion-permeable membrane and the cathode, in which part of the electrode is embedded in the ion-permeable membrane, each having a smaller distance between the electrodes and a smaller cell voltage, and thus have a lower electrical resistance and a higher electrolysis efficiency than the diaphragms in the comparative examples prepared without compositing (integrating).

REFERENCE SIGNS LIST

1    electrode-integrated diaphragm for alkaline water electrolysis
2    ion-permeable membrane
3    electrode
4    cathode
5    anode

**Claims**

1. An electrode-integrated diaphragm for alkaline water electrolysis, the diaphragm comprising:

   an ion-permeable membrane containing magnesium hydroxide and an organic polymer resin; and
   an electrode integrated with the membrane.

2. The electrode-integrated diaphragm for alkaline water electrolysis according to claim 1,
   wherein the magnesium hydroxide has an average particle size of 0.05 to 2.0 $\mu$m.

3. The electrode-integrated diaphragm for alkaline water electrolysis according to claim 1 or 2,
   wherein the organic polymer resin comprises an aromatic hydrocarbon-based resin.

4. The electrode-integrated diaphragm for alkaline water electrolysis according to any one of claims 1 to 3,
   wherein the ion-permeable membrane contains 10 to 40 parts by mass of the organic polymer resin relative to 100 parts by mass of the magnesium hydroxide.

5. The electrode-integrated diaphragm for alkaline water electrolysis according to any one of claims 1 to 4,
   wherein the ion-permeable membrane further comprises a porous support.

6. The electrode-integrated diaphragm for alkaline water electrolysis according to any one of claims 1 to 4,
   wherein the ion-permeable membrane comprises no porous support.

7. The electrode-integrated diaphragm for alkaline water electrolysis according to claim 5 or 6,
   wherein the porous support is a non-woven fabric, woven fabric, or mesh containing at least one resin selected from the group consisting of polypropylene, polyethylene, and polyphenylene sulfide.

8. A water electrolysis device comprising the electrode-integrated diaphragm for alkaline water electrolysis according to any one of claims 1 to 7.

9. A method of producing an electrode-integrated diaphragm for alkaline water electrolysis, the diaphragm including: an ion-permeable membrane containing magnesium hydroxide and an organic polymer resin; and an electrode integrated with the membrane, the method comprising:

   a step (1) of preparing an ion-permeable membrane-forming composition containing magnesium hydroxide and an organic polymer resin;
   a step (2) of bringing the ion-permeable membrane-forming composition into contact with an electrode; and
   a step (3) of forming the ion-permeable membrane.

10. The method of producing an electrode-integrated diaphragm for alkaline water electrolysis according to claim 9,
    wherein the step (2) comprises:

a step (2-1) of impregnating the electrode with water; and
a step (2-2) of applying the ion-permeable membrane-forming composition to the electrode.

11. The method of producing an electrode-integrated diaphragm for alkaline water electrolysis according to claim 9 or 10, wherein the electrode to be brought into contact with the ion-permeable membrane-forming composition in the step (2) has a water filling percentage of 10 to 80% by volume relative to 100% by volume of the vacant spaces in the electrode.

FIG.1

(a)

(b)

(c)

FIG.2

(a)

(b)

## INTERNATIONAL SEARCH REPORT

| International application No. |
| --- |
| PCT/JP2020/002935 |

| A. CLASSIFICATION OF SUBJECT MATTER |
| --- |
| Int. Cl. C25B13/08(2006.01)i, C25B9/00(2006.01)i, C25B9/08(2006.01)i<br>FI: C25B9/08, C25B9/00 A, C25B13/08 301 |
| According to International Patent Classification (IPC) or to both national classification and IPC |

| B. FIELDS SEARCHED |
| --- |
| Minimum documentation searched (classification system followed by classification symbols)<br>Int. Cl. C25B13/08, C25B9/00, C25B9/08 |
| Documentation searched other than minimum documentation to the extent that such documents are included in the fields searched<br>Published examined utility model applications of Japan   1922-1996<br>Published unexamined utility model applications of Japan   1971-2020<br>Registered utility model specifications of Japan   1996-2020<br>Published registered utility model applications of Japan   1994-2020 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2013-220608 A (NIPPON SODA CO., LTD.) 28 October 2013 | 1-11 |
| A | WO 2016/148302 A1 (ASAHI KASEI CORP.) 22 September 2016 | 1-11 |

☐ Further documents are listed in the continuation of Box C.　　☒ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>20.02.2020 | Date of mailing of the international search report<br>10.03.2020 |
| --- | --- |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
| --- |
| PCT/JP2020/002935 |

| Patent Documents referred to in the Report | Publication Date | Patent Family | Publication Date |
| --- | --- | --- | --- |
| JP 2013-220608 A | 28.10.2013 | (Family: none) | |
| WO 2016/148302 A1 | 22.09.2016 | US 2018/0073155 A1<br>EP 3272908 A1<br>CN 107250437 A | |

Form PCT/ISA/210 (patent family annex) (January 2015)

**EP 3 919 654 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013249510 A
- JP 2017066184 A
- JP 2012153958 A
- JP 2015086420 A
- JP 2018127664 A
- JP 2009242922 A
- JP 2005144329 A